# EUROPEAN PATENT APPLICATION

(11) **EP 1 215 178 A2**
(43) Date of publication of application: **19.06.2002**
(21) Application number: 01129812.2
(22) Date of filing: 14.12.2001
(51) Int. Cl.: C03B 23/035, E03C 1/18

(54) **Method and apparatus for producing sink tops with integrated sinks by moulding a glass sheet**

(30) Priority: 15.12.2000 IT BO000727
(71) Applicant: Porcellato, Guido, 31057 Cendon di Silea (IT)
(72) Inventor: Porcellato, Guido, 31057 Cendon di Silea (IT)
(74) Representative: Franzolin, Luigi

(57) **Abstract**

A method of producing glass sink tops (2) with built-in sinks and defined by a horizontal glass supporting surface (2a) and at least one glass sink (2b) formed in one piece with the horizontal supporting surface (2a); the method including the steps of heating at least one predetermined portion (3a) of a flat sheet of glass (3) of given thickness to a softening temperature of the glass, so as to bring the material locally to a highly viscous liquid state; deforming the predetermined portion (3a) of the sheet of glass (3) to form a respective concavity (3a); and cooling the sheet of glass (3) slowly to bring the sheet of glass to a given ambient temperature; the step of deforming the sheet of glass (3) including the step of maintaining, for a given time interval, a predetermined pressure difference in the air contacting the two opposite faces of the predetermined portion (3a) of the sheet of glass (3).

## Description

The present invention relates to a method of producing glass sink tops with built-in sinks, and to a system implementing such a method.

More specifically, the present invention relates to a method and system for producing glass sink tops with built-in sinks for bathrooms and similar, to which the following description refers purely by way of example.

As is known, in recent years, there has been a considerable increase in the sale of glass sink tops featuring one or more sinks formed in one piece with the top itself, and which is due to the increasing popularity of such tops among interior designers, particularly as regards the design of bathrooms and similar. In fact, though extremely expensive to produce, glass sink tops have become a fashionable fixture which is being proposed more and more often by interior designers to more discerning clientele.

As is known, glass sink tops with one or more built-in sinks comprise a flat sheet of glass of given thickness, deformed centrally to form one or more concavities of appropriate shape, each for collecting water from a tap. Each concavity defines a sink in the top, and has a contoured through hole in the bottom into which the water outlet pipe is inserted.

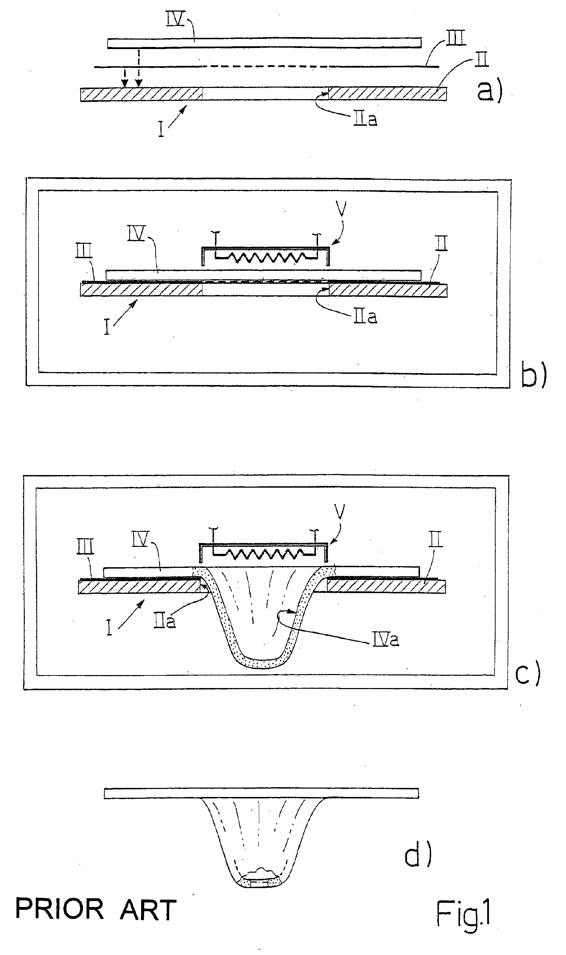

With reference to Figure 1, glass sink tops of the type described above are made from a perfectly flat sheet of glass, using a mold I made of high-temperature-resistant material and having a horizontal molding surface II with a central through opening IIa, the normally round or oval section of which depends on the shape of the sink to be formed in the sheet.

The production method currently employed comprises covering the molding surface II of mold I with one or more protective ceramic and/or glass fiber cloths III, and then placing on the molding surface II so covered a perfectly flat glass sheet IV of given thickness.

Mold I and glass sheet IV are then closed inside a molding oven in which the portion of glass sheet IV over opening IIa is heated by auxiliary heating elements V to the softening temperature of the glass, while the rest of glass sheet IV is maintained at a firming temperature slightly lower than the softening temperature, to prevent the sheet from cracking.

While inside the molding oven, the portion of glass sheet IV over opening IIa, being in a highly viscous, liquid state, is deformed by force of gravity to form a concavity IVa engaging opening IIa in molding surface II.

Once the concavity IVa is formed, the molding oven is turned off and glass sheet IV left inside to allow it to cool gradually to ambient temperature. Slow cooling of glass sheet IV inside the molding oven, in fact, is essential to prevent the formation of structural stress which could compromise the sheet.

Once cooled, glass sheet IV is removed from mold I and drilled and countersunk to form, in the bottom of cavity or cavities IVa, a contoured through hole into which the water outlet pipe is eventually inserted.

A major drawback of the above production method is that of producing sink tops with "pear-shaped" sinks which, besides accommodating very little water, are ineffective in containing splash produced by tap-water striking the bottom of the sink.

It is an object of the present invention to provide a method of producing glass sink tops with built-in sinks, which provides for obtaining sinks designed to eliminate the aforementioned drawbacks.

According to the present invention, there is provided a method of producing glass sink tops with built-in sinks and comprising a horizontal glass supporting surface and at least one glass sink formed in one piece with said horizontal supporting surface; said method comprising the steps of:
- heating at least one predetermined portion of a flat sheet of glass of given thickness to a softening temperature of the glass, so as to bring the material locally to a highly viscous liquid state;
- deforming said at least one predetermined portion of the sheet of glass to form a respective concavity; and
- cooling said sheet of glass slowly to bring the sheet of glass to a given ambient temperature;
said method being characterized in that said step of deforming said at least one predetermined portion of the sheet of glass comprises the step of maintaining, for a given time interval, a predetermined pressure difference in the air contacting the two opposite faces of said predetermined portion of the sheet of glass.

It is also an object of the present invention to provide a system for producing glass sink tops with built-in sinks, which provides for producing sinks designed to eliminate the aforementioned drawbacks.

According to the present invention, there is provided a system for producing glass sink tops with built-in sinks and comprising a horizontal glass supporting surface and at least one glass sink formed in one piece with said horizontal supporting surface; said system comprising a mold on which a flat sheet of glass of given thickness is placed; and at least one auxiliary heating element which is positioned at a respective predetermined portion of said sheet of glass to bring the sheet of glass locally to a given softening temperature of the glass; said mold forming a concavity of given shape in said predetermined portion of said sheet of glass; and the system being characterized by comprising means for maintaining a predetermined pressure difference in the air contacting the two opposite faces of said predetermined portion of the sheet of glass.

A non-limiting embodiment of the present invention will be described by way of example with reference to the accompanying drawings, in which:
Figure 2 shows, schematically, a system for producing glass sink tops with built-in sinks, in accordance with the teachings of the present invention;
Figure 3 shows a view in perspective of a glass sink top obtained using the Figure 2 system;
Figure 4 shows, schematically, the various steps in the method implemented by the Figure 2 system to produce glass sink tops with built-in sinks;
Figures 5 and 6 show, schematically, respective variations of the Figure 2 system.

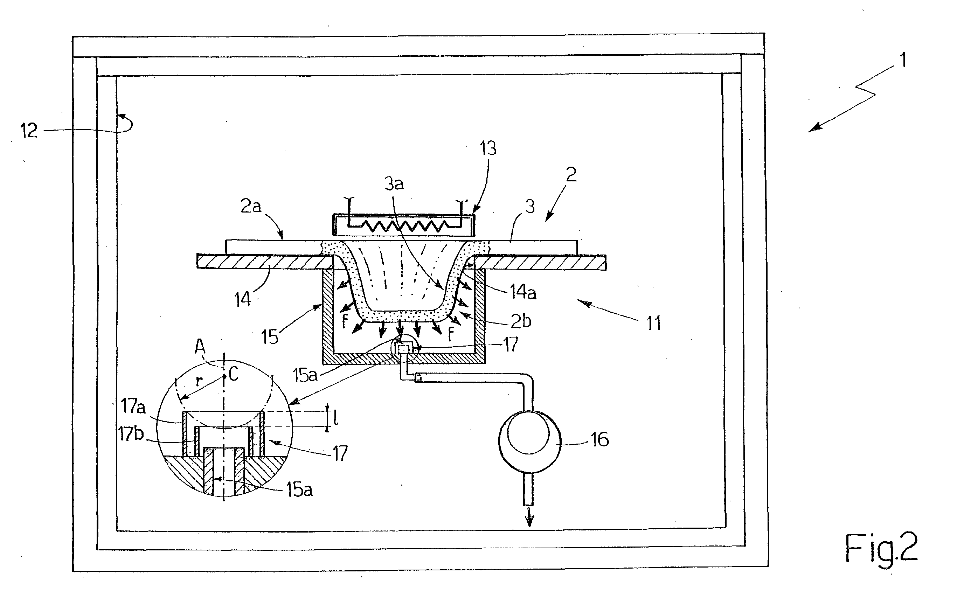

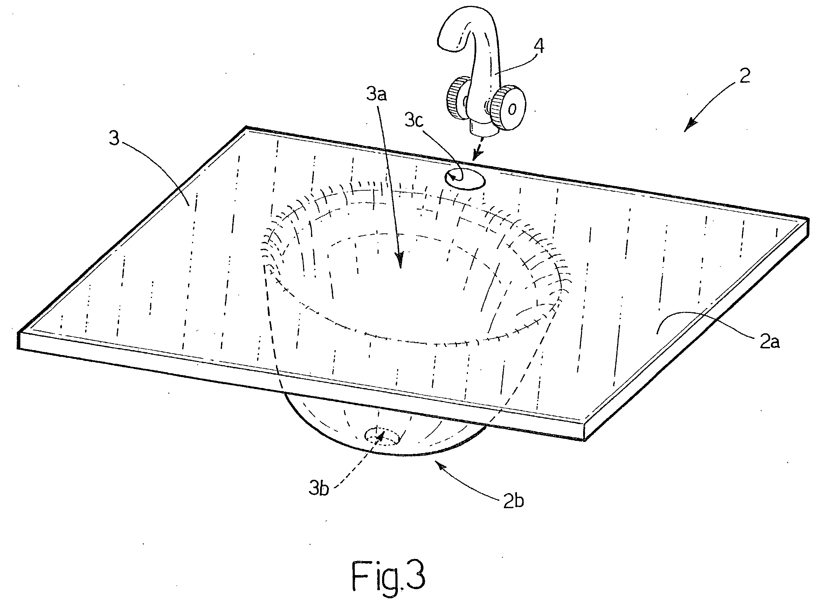

With reference to Figures 2 and 3, number 1 indicates as a whole a system for producing glass sink tops 2 comprising a horizontal glass supporting surface 2a, and one or more glass sinks 2b formed in one piece with horizontal supporting surface 2a.

More specifically, sink top 2 is defined by a flat sheet of glass 3 of predetermined thickness, deformed centrally to form one or more appropriately shaped concavities 3a (one in the Figure 3 example), each for collecting water issuing from a tap. Each concavity 3a defines a respective sink 2b in sink top 2, and comprises, at the bottom, a contoured through hole 3b into which the end of the water outlet pipe (not shown) is inserted.

With reference to Figure 3, the sheet of glass 3 preferably, though not necessarily, also has at least one second contoured through hole 3c formed in the flat portion of the sheet of glass 3, close to respective concavity 3a, and in which any known type of tap 4 is fitted.

With reference to Figure 2, system 1 for producing sink tops 2 with built-in sinks comprises: a mold 11, on which the sheet of glass 3 is positioned during the various processing steps to form concavity or concavities 3a; a molding oven 12 for bringing to and maintaining at a predetermined firming temperature the sheet of glass 3 and mold 11 on which the sheet is placed; and one or more auxiliary heating elements 13 positioned at the portion or portions of the sheet of glass 3 in which concavity or concavities 3a is or are to be formed, to heat the sheet of glass 3 locally to a softening temperature of the glass higher than said firming temperature.

With reference to Figures 2, 5 and 6, mold 11 is made of high-temperature-resistant material and comprises a horizontal molding surface 14 having one or more central openings 14a (one in the example shown), the section of which - preferably, though not necessarily, round or oval - depends on the shape of concavities 3a to be formed in the sheet of glass 3; and one or more cup-shaped containers 15 (one in the example shown), each of which is positioned with its opening corresponding with a respective opening 14a in molding surface 14.

Mold 11 also comprises at least one suction pump 16 which, on command, draws air out of cup-shaped containers 15 to keep the inside of cup-shaped containers 15 at a lower than outside pressure.

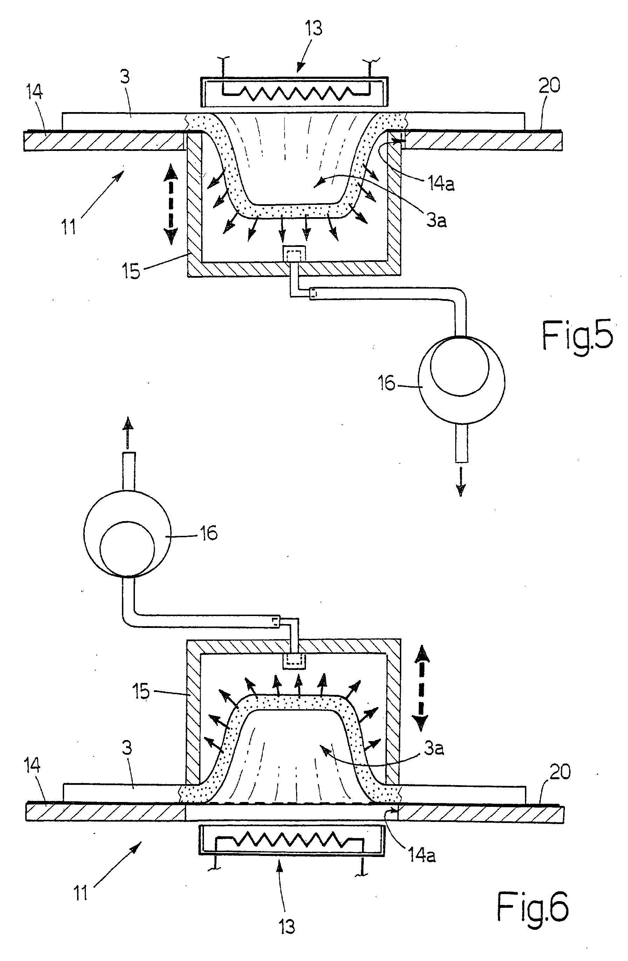

In a first embodiment, each cup-shaped container 15 is fixed permanently to the underside of molding surface 14 (Figure 2), at a respective opening 14a in molding surface 14; and, in a second embodiment, each cup-shaped container 15 is movable, with respect to molding surface 14, to and from a work position (Figures 5 and 6) resting on the sheet of glass 3, at respective opening 14a in molding surface 14.

In the latter case, mold 11 also comprises actuating means (not shown) for moving each cup-shaped container 15, on command, to and from the respective work position.

It should be pointed out that, in the second embodiment, each cup-shaped container 15 is movable perpendicularly to and indifferently below or above molding surface 14. In the first case, in the work position, each cup-shaped container 15 is positioned with its opening resting on the sheet of glass 3 and engaging a respective opening 14a in molding surface 14 (Figure 5). In the second case, in the work position, each cup-shaped container 15 is positioned with its opening resting on the sheet of glass 3, at respective opening 14a, but on the opposite side of the sheet of glass 3 to molding surface 14 on which the sheet of glass rests (Figure 6).

With particular reference to Figure 2, in the example shown, each cup-shaped container 15 is connected to suction pump 16 by an intake 15a, located on the bottom wall of cup-shaped container 15 and aligned with the point on the sheet of glass 3 at which contoured through hole 3b is later formed, and comprises at intake 15a a die 17 on which comes to rest the bottom portion of concavity 3a in which contoured through hole 3b is later formed.

More specifically, die 17 is so formed as to produce, on the bottom of concavity 3a as it is being formed, a contoured portion to facilitate the formation of contoured through hole 3b.

In the particular example shown, die 17 is defined by two cylindrical tubular elements 17a, 17b of different diameters and fixed coaxially with each other to the bottom of cup-shaped container 15. Cylindrical tubular elements 17a and 17b are oriented with their longitudinal axis A perpendicular to molding surface 14, and are of different lengths so that the larger-diameter cylindrical tubular element 17a projects beyond the end of the smaller-diameter cylindrical tubular element 17b by a portion of given length 1.

It should be pointed out that the diameters of the two cylindrical tubular elements 17a, 17b and length 1 of the portion of cylindrical tubular element 17a projecting beyond the axial end of cylindrical tubular element 17b are so selected as to produce, on the bottom of concavity 3a, a portion with a predetermined radius of curvature r and a predetermined center of curvature C. The location of center of curvature C and the value of radius of curvature r are so selected as to rough out the shape of contoured through hole 3b on the bottom of concavity 3a and so enable the hole to be formed more quickly and cheaply.

With reference to Figure 2, auxiliary heating elements 13 are of known type and normally defined by an electric resistor or free-flame gas burner enclosed in a cup-shaped metal shield of substantially the same shape as opening 14a in molding surface 14, i.e. the same shape as concavity 3a, and positioned with its opening facing the sheet of glass 3.

Molding oven 12, on the other hand, is of the type commonly used and therefore requires no further description.

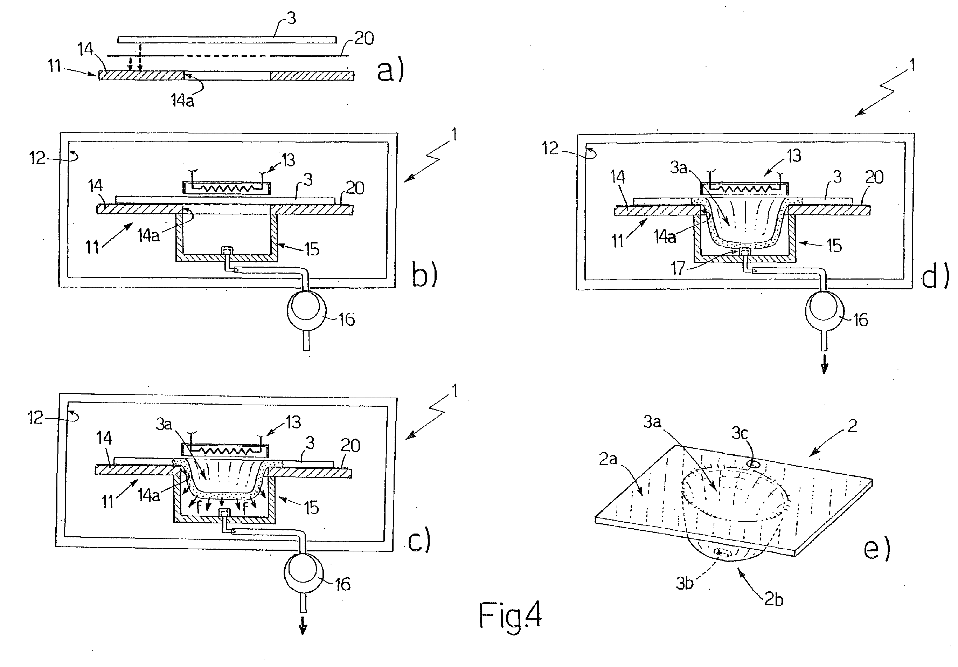

Operation of the system for producing glass sink tops 2 with built-in sinks will now be described with reference to Figure 4 and the production of a sink top 2 with one sink 2b.

To begin with, one or more protective ceramic and/or glass fiber cloths 20 are placed on molding surface 14 of mold 11.

A perfectly flat sheet of glass 3 of predetermined thickness (normally 6 to 32 mm) is then placed on molding surface 14, taking care to position the sheet of glass 3 so that the portion of the sheet in which concavity 3a is to be produced is positioned precisely over opening 14a in molding surface 14.

Once the sheet of glass 3 is positioned on molding surface 14, mold 11 and the sheet of glass 3 are closed inside molding oven 12, after first positioning an auxiliary heating element 13 over the portion of the sheet of glass 3 in which concavity 3a is to be formed.

Once the sheet of glass 3 is closed inside molding oven 12, the temperature in molding oven 12 is raised to bring the sheet of glass 3 to a predetermined firming temperature - in the example shown, about 540°C - within a predetermined time interval (e.g. 60 minutes).

Once the sheet of glass 3 is preheated, i.e. on reaching the firming temperature, auxiliary heating element 13 is turned on to gradually bring the portion of the sheet of glass 3 in which concavity 3a is to be formed to the melting temperature of the glass - in the example shown, at least 640°C.

When the portion of the sheet of glass 3 in which concavity 3a is to be formed reaches the melting temperature of the glass, suction pump 16 is turned on to keep the air inside cup-shaped container 15 at a lower than outside pressure.

Since protective cloths 20 act as seals to prevent any outside air from entering cup-shaped container 15 to compensate for the difference in pressure, the portion of the sheet of glass 3 in which concavity 3a is to be formed, being in a highly viscous, liquid state, is inevitably deformed by the forces generated by the difference in pressure of the air contacting the two faces of the sheet of glass 3 at the portion of sheet 3 at which concavity 3a is being formed.

Owing to the difference in pressure between the outer and inner surfaces of concavity 3a being formed, the portion of the sheet of glass 3 corresponding to concavity 3a is subjected to forces f locally perpendicular to the surface, and which tend to increase the inner volume of concavity 3a uniformly, in the same way as a rubber balloon filled with compressed air.

If movable with respect to molding surface 14, cup-shaped container 15 is set to the work position, and suction pump 16 is not turned on until the portion of the sheet of glass 3 in which concavity 3a is to be formed is positioned contacting the peripheral edge of the opening in cup-shaped container 15.

It should be pointed out that the time interval during which the two faces of the sheet of glass 3 are maintained at different pressures at opening 14a depends on the temperature to which the portion of the sheet of glass 3 corresponding to concavity 3a is heated, and on the difference in pressure between the outer and inner surfaces of that portion.

When the portion of the sheet of glass 3 corresponding to concavity 3a is deformed to the point of touching die 17 and so roughing out the shape of contoured through hole 3b on the bottom of concavity 3a, suction pump 16 is turned off.

Once concavity 3a is formed, molding oven 12 is turned off, and the sheet of glass 3 left inside to allow it to cool gradually to ambient temperature.

Once cooled, the sheet of glass 3 is removed from mold 11 and drilled and countersunk to form contoured through hole 3b and possibly also contoured through hole 3c and so obtain a sink top 2 with built-in sinks.

In certain cases, before and/or after forming contoured through hole 3b and contoured through hole 3c (if any), the sheet of glass 3 is again heated to firming temperature for a predetermined time interval to further reduce the likelihood of structural stress which may comprise the sheet of glass 3.

The production method described above has numerous advantages: in particular, it provides for obtaining sink tops 2 with much more rounded sinks 2b than those currently produced, and which therefore hold more water and provide for more effectively containing splash produced by water striking the bottom of the sink.

The method described also provides for producing sink tops more cheaply: by applying suction to the portion of the sheet of glass 3 in which concavity 3a is being formed, current operating temperatures can be lowered, thus reducing consumption of electricity and/or gas.

Lowering the operating temperature also provides for obtaining perfectly transparent sink tops 2 with no burn marks produced by the glass contacting the high-temperature mold.

Another advantage of the method described above is that of roughing out the shape of contoured through hole 3b when forming concavity 3a, thus drastically reducing the time and cost involved in subsequently forming contoured through hole 3b. This solution also ensures a perfectly round contoured through hole 3b and a perfect fit with the outlet pipe.

The method described above can also be used for simultaneously molding two superimposed sheets of glass to produce safer laminated glass sink tops 2.

Clearly, changes may be made to the system and method of producing glass sink tops 2 with built-in sinks as described and illustrated herein without, however, departing from the scope of the present invention.

In particular, in a first variation not shown, auxiliary heating elements 13 may be housed inside cup-shaped containers 15, which may be either integral with molding surface 14, or movable, with respect to molding surface 14, to and from the work position.

In a further variation not shown, auxiliary heating element 13 may be located behind cup-shaped container 15, in which case, the heat for heating the sheet of glass 3 locally to the softening temperature of the glass is transferred to the sheet of glass 3 by conduction through the body of cup-shaped container 15.

Finally, it should also be pointed out that suction pump 16 may be connected to cup-shaped container 15 to keep the inside of cup-shaped container 15 at a pressure higher than the surrounding pressure. In which case, at the portion of the sheet of glass 3 in which concavity 3a is being formed, a pressure difference is formed between the two faces of the sheet of glass 3, which tends to deform the sheet of glass 3 to form concavity 3a on the opposite side to cup-shaped container 15.

## Claims

1. A method of producing glass sink tops (2) with built-in sinks and comprising a horizontal glass supporting surface (2a) and at least one glass sink (2b) formed in one piece with said horizontal supporting surface (2a); said method comprising the steps of:
- heating at least one predetermined portion (3a) of a flat sheet of glass (3) of given thickness to a softening temperature of the glass, so as to bring the material locally to a highly viscous liquid state;
- deforming said at least one predetermined portion (3a) of the sheet of glass (3) to form a respective concavity (3a); and
- cooling said sheet of glass (3) slowly to bring the sheet of glass to a given ambient temperature;
said method being **characterized in that** said step of deforming said at least one predetermined portion (3a) of the sheet of glass (3) comprises the step of maintaining, for a given time interval, a predetermined pressure difference in the air contacting the two opposite faces of said predetermined portion (3a) of the sheet of glass (3).

2. A method of producing glass sink tops as claimed in Claim 1, **characterized by** comprising, prior to the step of heating said at least one predetermined portion (3a) of the sheet of glass (3) to said softening temperature of the glass, a preheating step in which the whole sheet of glass (3) is heated, within a given time, from ambient temperature to a given firming temperature.

3. A method of producing glass sink tops as claimed in Claim 2, **characterized in that**, prior to said preheating step, the sheet of glass (3) is placed on a molding surface (14) having at least one opening (14a), the section of which depends on the shape of the concavity (3a) to be formed in said sheet of glass (3); said sheet of glass (3) being positioned on said molding surface (14) so that said predetermined portion (3a) coincides with the opening (14a) in the molding surface (14).

4. A method of producing glass sink tops as claimed in Claim 3, **characterized by** comprising the step of placing on said molding surface (14) one or more protective cloths (20) of ceramic fiber and/or glass fiber before placing said sheet of glass (3) on the molding surface.

5. A system for producing glass sink tops (2) with built-in sinks and comprising a horizontal glass supporting surface (2a) and at least one glass sink (2b) formed in one piece with said horizontal supporting surface (2a); said system comprising a mold (11) on which a flat sheet of glass (3) of given thickness is placed; and at least one auxiliary heating element (13) which is positioned at a respective predetermined portion (3a) of said sheet of glass (3) to bring the sheet of glass (3) locally to a given softening temperature of the glass; said mold (11) forming a concavity (3a) of given shape in said predetermined portion (3a) of said sheet of glass (3); and the system being **characterized by** comprising means (15, 16) for maintaining a predetermined pressure difference in the air contacting the two opposite faces of said predetermined portion (3a) of the sheet of glass (3).

6. A system for producing glass sink tops as claimed in Claim 5, **characterized in that** said mold (11) comprises at least one cup-shaped container (15) which is positioned with its opening resting on said predetermined portion (3a) of the sheet of glass (3); and a pump unit (16) for keeping the air pressure inside the cup-shaped container (15) at a value other than the pressure outside the cup-shaped container (15), so as to produce and maintain a predetermined pressure difference in the air contacting the two opposite faces of said predetermined portion (3a) of the sheet of glass (3).

7. A system for producing glass sink tops as claimed in Claim 6, **characterized in that** said mold (11) comprises a molding surface (14) having, centrally, at least one opening (14a), the section of which depends on the shape of the concavity (3a) to be formed in the sheet of glass (3); said predetermined portion (3a) of the sheet of glass (3) being positioned at said opening (14a); and said cup-shaped container (15) being fixed to said molding surface (14) at said opening (14a) in the molding surface (14).

8. A system for producing glass sink tops as claimed in Claim 6, **characterized in that** said mold (11) comprises a molding surface (14) having, centrally, at least one opening (14a), the section of which depends on the shape of the concavity (3a) to be formed in the sheet of glass (3); said predetermined portion (3a) of the sheet of glass (3) being positioned at said opening (14a); and said cup-shaped container (15) being movable, with respect to said molding surface (14), to and from a work position in which the cup-shaped container is positioned with its opening resting on said predetermined portion (3a) of the sheet of glass (3).
